(19)

Europäisches
Patentamt
European
Patent Office
Office européen
des brevets

(11) **EP 3 819 282 A1**

(12) **EUROPEAN PATENT APPLICATION**

(43) Date of publication:
**12.05.2021  Bulletin 2021/19**

(21) Application number: **19207225.4**

(22) Date of filing: **05.11.2019**

(51) Int Cl.:
*C05C 9/00* *(2006.01)*          *C07C 319/22* *(2006.01)*
*C22B 34/34* *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **Tessenderlo Kerley, Inc.**
**Phoenix, AZ 85008-3279 (US)**

(72) Inventors:
• **LOCKHART, Constance Lynn Frank**
**Phoenix, AZ 85008 (US)**
• **HOJJATIE, Michael Massoud**
**Phoenix, AZ 85008 (US)**
• **DIMITRIADIS, Alexandros**
**Phoenix, AZ 85008 (US)**

(74) Representative: **Hoyng Rokh Monegier B.V.**
**Rembrandt Tower, 30st Floor**
**Amstelplein 1**
**1096 HA Amsterdam (NL)**

(54)     **POLYSULFIDE COMPOSITIONS AND PROCESSES FOR MAKING SAME**

(57)     Aqueous polysulfide compositions comprise one or more polysulfides; wherein the amount of polysulfides in the composition is at least about 35% by weight, preferably at least about 40% by weight, more preferably at least about 45% by weight, even more preferably at least about 50% by weight; and wherein the amount of thiosulfate anions in the composition is at most about 15% by weight, preferably at most about 10% by weight, most preferably at most about 5% by weight, relative to the total weight of the composition. The compositions of the invention have many uses and are in particular useful in metal capturing, cyanide scavenging, soil remediation, water treatment, petroleum processing, leather processing, and the making of paper pulp. Processes for making lead to aqueous polysulfide compositions high in active ingredients and low in undesired by-products.

EP 3 819 282 A1

**Description**

FIELD OF THE INVENTION

The present invention relates to polysulfide compositions with higher amounts of reactive compounds and to the making of such compositions. The polysulfide compositions of the invention are useful in the treatment of water, the capturing of (heavy) metals, etc.

BACKGROUND OF THE INVENTION

Polysulfides have wide applicability in various industrial applications including the capturing of heavy metals. Alkaline polysulfides may be manufactured by, for example, reacting sodium hydroxide or calcium hydroxide with sulfur at high temperature. Calcium polysulfides for example may be prepared by boiling calcium hydroxide and sulfur together with a small amount of surfactant, or as otherwise found in the art.

Alkaline earth polysulfides and alkaline polysulfides, of which the most preferred include Calcium Polysulfide ("CaPS"), Potassium Polysulfide ("KPS") and Sodium polysulfides ("NaPS"), find their use as depressing reagents at separation/flotation plants. The use of flotation separation in the processing of molybdenite and copper ore is well known in the industry and needs no further elaboration.

Sodium polysulfides provide significant advantages with respect to health, safety, environmental (HSE) in handling, storage and application compared to sodium hydrosulfide ("NaHS"). This is primarily due to having much lower/negligible toxic Hydrogen Sulfide ($H_2S$) vapor pressures in comparison to the NaHS standard at the pH ranges of interest to processors. The alkaline earth polysulfides and alkaline polysulfides provide comparable separation performance to traditional alkali sulfides and are cost-effective. They proved as efficient as the gold standard NaHS in molybdenite flotation processes.

In an environment where one wants to save on water and achieve the highest possible efficiency, there is a further demand for improved water based polysulfide compositions. There is in particular demand for water soluble polysulfides with an increased solubility.

DESCRIPTION OF THE INVENTION

Against this background we now provide an aqueous polysulfide composition comprising one or more inorganic polysulfides, wherein the composition comprises at least about 35% by weight of said polysulfides (typically ammonium polysulfides (a1) and/or alkali metal polysulfides (a2) and/or alkaline earth polysulfides (a3)) and at most about 15% by weight of thiosulfate anions. Unless specified otherwise, weight percentages are relative to the total weight of the aqueous polysulfide composition.

The term "Inorganic polysulfides" refers to compounds that dissolve in water to form $HS_x^-$ or $S_x^{-2}$ anions where x is equal to or greater than 2. Examples include sulfanes ($H_2S_x$) and polysulfide salts or mixtures thereof. Preferred in the context of the invention are ammonium polysulfides (a1) and/or alkali metal polysulfides (a2) and/or alkaline earth polysulfides (a3). Examples of alkali metal polysulfides are for instance sodium polysulfides and/or potassium polysulfides. Examples of alkaline earth polysulfides are for instance calcium polysulfides and/or magnesium polysulfides. When dissolved in water the inorganic polysulfides have a pH value greater than 7, for example greater than 9 or greater than 10.

In an embodiment of the invention, the amount of polysulfides, more in particular of polysulfide salts, in the aqueous composition is at least about 36, 37, 38, 39 or 40% by weight. Preferably, this amount is at least about 41, 42, 43, 44% by weight. More preferably, this amount is at least about 45, 46, 47% by weight, even at least about 48, 49 or 50% by weight or more.

The amount of thiosulfate anions present in the aqueous compositions of the invention typically is at most about 14, 13, 11, 10, preferably at most about 9, 8, 7, 6% by weight. More preferably, this amount is at most about 5, 4 or 3% by weight. Even more preferably, this amount is at most about 2.9, 2.8, 2.7, 2.6, 2.5, 2.4, 2.3, 2.1, or 2 % by weight. This amount may even be at most about 1, 0.9, 0.8, 0.7, 0.6 or 0.5% by weight.

Typically, the polysulfides are inorganic polysulfides, more in particular inorganic water soluble polysulfides. Preferred polysulfides are polysulfide salts. Typically one or more alkaline polysulfides and/or one more alkaline earth polysulfides are present. Also preferred are ammonium polysulfides.

Alkaline polysulfides typically correspond to the formula M-Sq-M, wherein the "M" is independently selected from alkali metal ions such as sodium and/or potassium ions, preferably sodium ions, wherein the "S" has its normal meaning, that is, a sulfide, and wherein "q" is equal to or greater than 2. Preferably, "q" is an integer from 2 to 5, more preferably from 2 to 4. Most preferably, the alkaline polysulfide has an "average q" of between 3.5 and 5, of between 3.5 and 4.5.

Alkaline earth polysulfides typically correspond to the formula M-Sq, wherein the "M" is independently selected from alkaline earth ions such as calcium or magnesium, wherein the "S" has its normal meaning, that is, a sulfide and wherein "q" is equal to or greater than 2.

Preferably, "q" is an integer from 2 to 6, more preferably from 3 to 6. Most preferably, the alkaline earth polysulfide has an "average q" of between 3 and 5 or between 4 an d 5.

It is possible that the aqueous polysulfide composition of the invention comprises mixtures of 2 or more different polysulfide salts. These can be mixtures of different alkaline polysulfides, of different alkaline earth polysulfides, or of alkaline and alkaline earth polysulfides etc.

Preferred polysulfides are calcium polysulfides, magnesium polysulfides, sodium polysulfides, potassium polysulfides, ammonium polysulfides, and mixtures thereof (of any of these).

Preferred in the context of the invention are calcium polysulfides and/or sodium polysulfides and/or potassium polysulfides. Most preferred are sodium polysulfides and/or potassium polysulfides.

In an embodiment of the invention, the aqueous polysulfide composition of the invention comprises one or more sodium polysulfides. In another embodiment of the invention, the aqueous polysulfide composition comprises one or more potassium polysulfides. In yet another embodiment of the invention, the aqueous polysulfide composition comprises one or more calcium polysulfides.

Preferably, the aqueous polysulfide composition of the invention (any of the above) are aqueous solutions. Preferred are saturated solutions in water. An embodiment of the invention relates to an aqueous solution of alkali metal polysulfides. Another embodiment of the invention relates to an aqueous solution of alkaline earth polysulfides. Yet another embodiment of the invention relates to an aqueous solution of alkali metal polysulfides and alkaline earth polysulfides.

An embodiment of the invention relates to an aqueous solution of sodium polysulfides. Another embodiment of the invention relates to an aqueous solution of potassium polysulfides. Yet another embodiment of the invention relates to an aqueous solution of calcium polysulfides.

Preferably, the aqueous polysulfide composition of the invention (any of the above) has a total S content (expressed in wt%) of at least about 26, 27, 28 or 29%. Preferably, this content is at least about 30, 31, 32 or 33%.

Preferably, the aqueous polysulfide composition of the invention (any of the above) has a total $S^{-2}$ content (expressed in wt%) of at least about 6, 6.5, or 7%. Preferably, this content is at least about 7.1, 7.2, 7.3 or 7.4%. More preferably, this content is at least about 7.5, 7.6, 7.7, 7.8, 7.9 or 8%. It can even be at least about 8.1, 8.2, 8.3, 8.4, 8.5, 8.6, 8.7, 8.8, 8.9 or 9%.

Preferably, the aqueous polysulfide composition of the invention (any of the above) has a $S^0$ content of at least about 15, 16, 17 or 18% by weight. Typically, this content is at most about 18.5, 19, 19.5, 20, 20.5, 21% by weight. By "$S^0$" is meant the internal sulfur of the polysulfide, the part of the polysulfide backbone that is not reactive. Included herein are also minor amounts of sulfate and sulfite.

Preferably, the %S (determined analytically by AOAC method 980.2) in the inorganic polysulfide, more in particular the polysulfide salt (such as a $Na_2S_x$) is at least about 24, 24.5, 25, 25.5, 26, 26.5 or 27% by weight. More preferably, the %S in the inorganic polysulfide, more in particular the polysulfide salt (such as a $Na_2S_x$) is at least about 27.5, 28, 28.5, 29, 29.5 or 30% by weight.

Preferably the sum of %S + %Na (as calculated from % Na and %S) in the aqueous composition of the invention, is at least about 35, 35.5, 36, 36.5, 37, 37.5, 38, 38.5, 39, 39.5 or 40% by weight. It can even be at least about 41, 42, 43, 44 or 45 % by weight.

Preferably, the ratio of polysulfides over thiosulfates in the aqueous composition is from about 55/1 to about 1.5/1, more in particular from about 50/1 to about 1.8/1. Preferably, this ratio is at least 2, at least 2.5, preferably at least 2.6, 2.7, 2.8, 2.9 or 3 over 1. Often, this ratio is at least 3, 3.5, 4, 4.5, 5, 5.5, 6, 6.5, 7, 7.5, 8, 8.5, 9, 9.5 or 10 over 1.

Preferably, the aqueous polysulfide composition of the invention (any of the above) has a pH in the range of from about 8 to about 13, typically from about 8.5 to about 13. Preferably, the pH is at least about 9, 9.5 or even 10.

In an embodiment of the invention, the aqueous polysulfide composition is a saturated solution of polysulfide salts in water.

Aqueous polysulfide compositions of the invention can be prepared in different ways. Below some preferred manufacture processes are discussed. Standard a sodium polysulfide is prepared as follows: 6 NaOH + 10 S → $2Na_2S_4$ + $Na_2S_2O_3$ + 3 $H_2O$ (1). For a calcium polysulfide, that would be: 2 $Ca(OH)_2$ + 10 S → 2 Ca + $CaS_2O_3$ + $3H_2O$ (2) or: $2Ca(OH)_2$ + 6S → $CaS_4$ + $CaS_2O_3$ + $3H_2O$. The inventors found that it is preferred to avoid the presence of excess soluble hydroxide, or to assure that it is consumed prior to the addition of elemental sulfur to form the polysulfide(s).

Provided herein is also a process for preparing a polysulfide composition having at least about 35% by weight of polysulfides, more in particular of polysulfide salts, said composition comprising at most about 15% by weight, typically at most about 10% by weight, preferably at most about 5% by weight, more preferably at most about 3% by weight of thiosulfate anions, relative to the total weight of the composition; said process comprising a step (i) of reacting) a hydrosulfide (b) and/or a sulfide (c) with elemental sulfur.

In one embodiment of the invention, step (i) of the process comprises reacting an ammonium hydrosulfide (b1) and/or an alkali metal hydrosulfide (b2) and/or an alkaline earth hydrosulfide (b3) with elemental sulfur.

In another embodiment of the invention, step (i) of the process comprises reacting an ammonium sulfide (c1) and/or an alkali metal sulfide (c2) and/or an alkaline earth sulfide (c3) with elemental sulfur. In a preferred embodiment, this step (i) is preceded by a step of reacting a hydroxide, more in particular a soluble hydroxide, with a hydrosulfide (b) to form a sulfide (c).

In a preferred embodiment, the polysulfide salt(s) is prepared in two steps, said steps comprising:

- First, reacting a hydroxide (a), more in particular a soluble hydroxide (a), with a hydrosulfide (b) to form a sulfide (c), and
- Second, converting said sulfide (c) into a polysulfide (d) via further reaction with elemental sulfur.

Generally, the polysulfide, more in particular the polysulfide salt, is prepared in the absence of oxygen, preferably under a nitrogen blanket. Typically, the aqueous polysulfide composition that is prepared has a pH in the range of from about 8 to about 13, typically from about 8.5 to about 13. Preferably, the pH is at least about 9, 9.5 or even 10.

Reaction temperatures are in general between about 50°C and about 120°C, more preferably between about 50°C and about 115°C. Often the temperature is at least about 55°C, more preferably at least about 60°C. In general, the reaction temperature is at most about 100°C, preferably at most about 95°C, more preferably at most about 90°C. Reaction times can vary but in general vary in the range of from about 20 minutes to about 150 minutes. In general, the reaction time is between about 25 minutes and about 120 minutes. Stirring speed is adapted to the circumstances to achieve a good mixing and to reduce gas bubbles.

In a first embodiment of the invention, in step (i) as described, one more hydrosulfide salts (b) are reacted with elemental sulfur. Possibly this step is followed by a step (ii) comprising adjusting the pH where needed so that the pH of the aqueous polysulfide composition is in the range of from about 8 to about 13, preferably from about 8.5 to about 13, more preferably from about 9 to about 13. Most preferably, the pH is adjusted to be at least about 10 or higher. The hydrosulfide salt is preferably selected from sodium hydrosulfide, potassium hydrosulfide, ammonium hydrosulfide, calcium hydrosulfide, magnesium hydrosulfide, or any mixture thereof (of any of these).

In a second embodiment of the invention, in step (i) as described, one or more sulfide salts (c) are reacted with elemental sulfur. In a preferred embodiment, this step (i) is preceded by a step of having a hydroxide (a) react with one or more hydrosulfide salts (b) to form the sulfide salt (c) that is then reacted in step (i) with elemental sulfur to form a polysulfide salt (d). Most preferably the hydroxide salt and the hydrosulfide salt share a common cation. Again, if needed, step (i) can be followed by a step (ii) comprising adjusting the pH where needed so that the pH of the aqueous polysulfide composition is in the range of from about 8 to about 13, preferably from about 8.5 to about 13, more preferably from about 9 to about 13. More preferably, the pH is adjusted to be at least about 10 or higher. Often however, such step (ii) will not be needed.

The hydroxide (caustic), most often, is provided in the form of an alkaline solution having a strength of at least about 20 wt%, preferably at least about 25 wt%, more preferably at least about 30 about wt%. Preferably, the alkaline solution has a strength of from about 30 wt% to about 50 wt%, in particular with alkali hydroxides being used.

In a preferred embodiment, the hydrosulfide (b) prepared is selected from ammonium hydrosulfides (b1) and/or from , alkali metal hydrosulfides (b2) and/or from alkaline earth hydrosulfides (b3). Typicallys the one or more hydrosulfide salts are selected from ammonium hydrosulfides, sodium hydrosulfides, potassium hydrosulfides, calcium hydrosulfides and/or magnesium hydrosulfides. Preferred are sodium hydrosulfides and/or potassium hydrosulfides and/or calcium hydrosulfides. More preferred are sodium hydrosulfides and/or potassium hydrosulfides. Particularly preferred are sodium hydrosulfides.

The sulfide (c) that is (further) reacted with elemental sulfur most typically is an ammonium sulfide (c1) and/or an alkali metal sulfide (c2) and/or an alkaline earth sulfide (c3). In a preferred embodiment, one or more alkali metal sulfides (c2) and/or one or more alkaline earth sulfides (c3) are reacted with elemental sulfur to form a corresponding polysulfide salt. Preferred alkali metal sulfides are potassium sulfide and/or sodium sulfide.

The elemental sulfur (S) used in the above described reactions may be either solid or liquid/molten sulfur, but preferably it is molten sulfur so that the stirring action in the reactor breaks up the molten sulfur feed as it cools to form small solid sulfur particles. Alternatively, small solid sulfur particles can be added directly to the reaction vessel. Small sulfur particles advantageously have a large total surface area available for reaction. When sulfur is used in the molten/liquid state, a higher reactor pressure and higher stirring agitation may be required to keep molten sulfur disbursed into small droplets.

In an embodiment of the invention, the aqueous polysulfide composition obtained (any of the above) may be subjected to a heat treatment to lower the amount of thiosulfates initially present. In such step, the aqueous polysulfide composition is kept at a temperature of about 50°C to about 70°C for a period of about 30 to about 60 minutes. This step is optional and often not needed.

According to an embodiment of the invention, the aqueous polysulfide composition prepared with a method of the invention (any of the above), comprises one or more polysulfide salts of the formula X-Sq-X, wherein the X is independently selected from alkali metal ions such as sodium and/or potassium ions, preferably sodium ions, wherein the "S" has its normal meaning, that is, a sulfide, and wherein "q" is (an integer of) equal to or greater than 2, preferably "q" is an integer from 2 to 5, with a preferred "average q" of between 3.5 and 5, of between 3.5 and 4.5.

According to an embodiment of the invention, the aqueous polysulfide composition prepared with a method of the invention (any of the above) comprises one or more polysulfide salts of the formula Y-Sq, wherein the Y is independently selected from alkaline earth ions, wherein the "S" has its normal meaning, that is, a sulfide, and wherein "q" is (an integer of) equal to or greater than 2, preferably "q" is an integer from 2 to 6, more preferably "q" is from 3 to 6, with a preferred "average q" being between 3 and 5, or between 4 and 5.

According to an embodiment of the invention, the aqueous polysulfide composition prepared with a method of the invention (any of the above) comprises one or more polysulfide salts selected from calcium polysulfides, magnesium polysulfides, sodium polysulfides, potassium polysulfides, ammonium polysulfides, and mixtures thereof (of any of these). Preferred in the context of the invention are calcium polysulfides, sodium polysulfides, potassium polysulfides, and mixtures thereof (of any of these). Most preferred are sodium polysulfides and/or potassium polysulfides. Particularly preferred are sodium polysulfides.

In a preferred embodiment of the invention, an aqueous solution is prepared that comprises one or more polysulfide salts in water. In an embodiment of the invention, the aqueous polysulfide composition that is prepared comprises one or more sodium polysulfides. In another embodiment of the invention, the aqueous polysulfide composition that is prepared comprises one or more potassium polysulfides. In yet another embodiment of the invention, the aqueous polysulfide composition that is prepared comprises one or more calcium polysulfides.

Preferably, the aqueous polysulfide compositions that are prepared (any of the above) are aqueous solutions. Preferred are saturated solutions in water. An embodiment of the invention relates to an aqueous solution of alkali metal polysulfides. Another embodiment of the invention relates to an aqueous solution of alkaline earth polysulfides. Yet another embodiment of the invention relates to an aqueous solution of alkali metal polysulfides and alkaline earth polysulfides.

In an embodiment of the invention, an aqueous solution of sodium polysulfides is prepared. In another embodiment of the invention relates an aqueous solution of potassium polysulfides is prepared. In yet another embodiment of the invention an aqueous solution of calcium polysulfides is prepared.

Typically, the polysulfide composition prepared is an aqueous composition comprising at least about 20 wt% (percent by weight), preferably at least about 30 wt% of water, more preferably at least 40 wt% of water, most preferably at least 45 about wt% of water.

The above (any of the aqueous polysulfide compositions described above) can be transformed into a solid polysulfide based product, typically a hydrated salt. In said case, the process of the invention will further comprise a step of converting the aqueous polysulfide composition into a solid product. A simple way of doing that is by preparing a solution that contains at least about 45 wt%, at least about 50 wt%, at least about 51 wt% and more of the polysulfides (polysulfide salts). In the case of $Na_2S_3$, a hydrated solid can be obtained from a solution having at least about 50 wt% of $Na_2S_3$. A preferred route consists of reacting first NaOH + NaSH to form $Na_2S$ and water. Then transforming $Na_2S$ into $Na_2S_3$ by further a reaction with S at about 75°C. Upon cooling, a hydrated solid will then result. The hydrated solid can be removed by filtration and be further dried if desired, for instance by drying it in an oven at a temperature of about 60°C. The same can be done starting from a solution having at least about 46 wt% of $Na_2S_2$. To make a hydrated salt of $Na_2S_4$, the $Na_2S_4$ concentration needs to be well beyond 50 wt%. $Na_2S_4$ is soluble at room temperature and normal pressure at a concentration of about 50 wt%.

The aqueous polysulfide compositions of the invention has many end uses and can for instance the capturing of metals and/or for the scavenging of cyanide. For the capturing of metals any of the above described aqueous polysulfide compositions can be used, though those based on sodium polysulfides and/or potassium polysulfides and/or calcium polysulfides are preferred. The aqueous polysulfide compositions of the invention proved in particular suitable for the capturing of metals like Ni, Ca, Cd, Cu, Mo, Pb, Hg, $Cr^{+6}$, Ag, Ti, Fe and/or Zn

The capturing of metals herein can be through precipitation, chelation, solubilization, complexation, by the use of ligands, complexing agents, by forming insoluble and precipitating sulfide etc. The polysulfides present in the aqueous composition of the invention can herein act as lixiviant, depressants etc.

The aqueous polysulfide compositions of the invention are in particular useful for the capturing of copper (Cu) and the separation of copper from molybdenum (Mo) as described in WO 2015/157498. The aqueous polysulfide composition of the invention herein acts as a depressant in separating copper from molybdenum. The act of the depressant is to render the Cu minerals hydrophilic, so that they remain in the aqueous phase, id est they are "depressed", so that they do not come into the froth phase. Meanwhile Mo naturally floats into the froth phase due to its hydrophobicity. The aqueous polysulfide compositions of the invention outperformed the polysulfide compositions described in WO2015/157498. Both calcium polysulfide solutions and sodium polysulfide solutions according to the invention can be used for these purposes.

The polysulfide, more in particular the polysulfide salts present in the aqueous compositions of the invention can complex with both base metals and heavy metals. Consequently, the materials according to the invention will further also be suitable for heavy metal removal in soil remediation and water treatment. Materials of the invention can also be used to provide sulfur species in a Kraft pulping process.

The aqueous polysulfide compositions of the invention can also be used for the scavenging of (free) cyanide in e.g. refinery waste water effluents. This can lead to a better corrosion control. Free cyanide is herein scavenged before it gets to the sour water stripper. Polysulfides present in the aqueous composition of the invention will scavenge the free cyanide and convert it into a thiocyanate, which is easy to handle in refinery water treatment facilities. For the scavenging of (free) cyanide, particularly solutions based on ammonium polysulfides are proven useful.

The aqueous polysulfide compositions of the invention can also be used in making of paper pulp; in making leather, for instance in the dehairing of hides before tanning; in wool pulling, in the taking of e.g. wool from sheepskins; in mineral ore benefication, e.g. as a reagent in flotation cells to react with heavy metals such a copper (Cu), lead (Pb) or molybdenum (Mo); in petroleum processing; in the treatment of gases; and in the treatment of waste water streams.

An aspect for the invention hence also relates to the use of a polysulfide composition of the invention (any of those described), for the capturing of metals, for the treatment of water. The polysulfide composition of the invention can also be used in mining applications, for instance as flocculation agent, as lixiviant and/or as complexing ligand. Metals that can be captured are Ni, Ca, Cd, Cu, Mo, Pb, Hg, $Cr^{+6}$, Ag, Ti, Fe and/or Zn.

Throughout the whole of the invention including the Examples section, the following methods haven been used.

Total Sulfur content (in wt%, weight percentages): was determined per AOAC Official Method 980.02.

Thiosulfate content (in wt%, weight percentages): was determined via ion chromatography (IC). Below information on the equipment, the column, mobile phase and flow rates as used. Via IC the amount of $S_2O_3^{-2}$ anions is being measures, which amounts in the invention are calculated back to weight percentages. Instrument: Thermo Dionex ICS-5000 + DP; Column: Ion Pac AS11 RFIC, 4x250mm; Guard Column: IonPac AG11 RFIC, 4x50mm; Mobile Phase: 10mM KOH; Flow Rate: 1.0ml/min; Column Temperature: 30°C

Sulfide content (in wt%, weight percentages): was determined via Back Titration with Sodium Thiosulfate after reaction with standard Iodine titration reagent. The amount of Sulfide is calculated by deducting the equivalents of iodine consumed by the thiosulfate present - as determined by IC - from the total equivalents of iodine consumed.

Total Sodium (in wt%, weight percentages): was determined using Atomic Absorption Spectroscopy (AAS). Instrument used: Shimadzu AA-6800;

$$\lambda = 330nm;$$

Matrix/Ionization Suppressant: 2000ppm KCl. For total Potassium,

$$, \lambda = 404.4nm; ;$$

Matrix/Ionization Suppressant: 3000ppm CsCl3.

Total Calcium (in wt%, weight percentages): was determined using EDTA titration.

In all of the above measurements were done at room temperature (near 20°C) and at atmospheric pressure, this normally right after production. If any heat treatment is performed post-reaction before measuring the different amounts, then this is explicitly mentioned

The invention is now described in detail below, via the following Examples, which are not intended to be limitative.

## EXAMPLES

Example 1 - Sodium Polysulfide synthesis according to the invention

Two new products were synthesized for evaluation per the reaction paths noted. The objective is to attain a high $s^{-2}$, low $S_2O_3^{-2}$ Sodium Polysulfide (NaPS).

*Making of the first product according to the following route:*

$$(1) \qquad 2NaSH + 3S \rightarrow Na_2S_4 + H_2S$$

651 gm of 44.5% (wt%) NaSH was reacted with 254 gm of sulfur (small solid particles) and 189gm of addition water, thereby obtaining a 46% (wt%) NaPS solution (called NaPS-1). Reaction was conducted at 75 oC for 2 hours. A small amount of sulfur remained unreacted.

*Making of the first product according to the following route:*

(2)

1st reaction: $NaOH + NaSH \rightarrow Na_2S + H_2O$

2nd reaction: $Na_2S + 3S \rightarrow Na_2S_4$

Here, 207 gm of a commercial 50% (wt%) NaOH solution was reacted with 324 gm of the same 44.5% (wt%) NaSH product and 220 gm of additional water. The initial reaction was conducted for 30 minutes at 75 °C. For the 2nd reaction, 254 gm of sulfur (small solid particles) was added and reaction was continued for an additional 90 minutes at 75 °C. This lead to a 46% (wt%) NaPS solution (called NaPS-2)

A description and characterization of both products are presented in Table 1 below.

In commercial 38% Sodium Polysulfide solutions (NaPS-0) available on the market, prepared from caustic and elemental sulfur, the amount of polysulfides present is near 21 wt% and the amount of sodium thiosulfates in this product is near 14-17 wt% (total conc. being near 38 wt%). Materials of the invention have thus a higher amount of active ingredient and less of undesired byproducts. The ratio of sodium polysulfide : sodium thiosulfate is ~ 1.3:1 which is an amazing difference compared to products NaPS-1 and NaPS-2 according to the invention

It was noted that when NaPS-0 was subjected to a heat treatment (2 hours at near 200°C in a pressure reactor at Patm) that this did not reduce the amount of sodium thiosulfates as expected. $S_2O_3^{-2}$ does not decompose at the elevated temperature of 200°C, but rather increases.

Example 2 - reducing the $H_2S$ vapor formed while making NaPS-1

A disadvantage of product NaPS-1 (see above) is the build-up of a $H_2S$ pressure. NaPS-1 - when adjusted post-reaction to the same pH as NaPS-0 - had the same low $S_2O_3^{-2}$ content as NaPS-1 itself having a pH near 10. NaPS-1 pH adjusted contains over 50 wt% of $Na_2Sx$ and less than 1 wt% of $S_2O_3^{-2}$ anions, whereas NaPS-0 (Tetragard™, available from Tessenderlo Kerley Inc) has near 21 wt% of $Na_2Sx$ and well over 10 wt% of $S_2O_3^{-2}$ anions (as measured via IC). NaPS-1 and the NaPS-1 that is pH adjusted are similar in composition and behavior. $S_2O_3^{-2}$ content remains diminished in the pH adjusted solution.

Table 1

| Product | NaPS-1 | NaPS-2 |
|---|---|---|
|  |  |  |
| **Raw Material** |  |  |
| NaOH (50%) gm | 0 | 206.6 |
| NaSH (44.5%) gm | 650.8 | 325.4 |
| S (gm) | 188.8 | 253.5 |
| $H_2O$ (gm) | 253.7 | 219.5 |
| total (gm) | 1093.3 | 1005.0 |
|  |  |  |
| Filtrate (gm) | 984.0 | 968.7 |
| Solids (gm) | 7.3 | 4.3 |
| Total Recovery(gm) | 991.3 | 973.0 |
| %Recovery | 90.7 | 96.8 |
| %Filtrate | 99.3 | 99.6 |

(continued)

| Raw Material | | |
|---|---|---|
| %Solid | 0.7 | 0.4 |
| | | |
| **Assay** | | |
| pH | 9.4 | 12.2 |
| %Na | 11.5 | 11.6 |
| %S (total) | 34.7 | 34.4 |
| %NaPS | 46.2 | 45.9 |
| $NaS_x$ average x number | 4.3 | 4.3 |
| S:Na | 2.2 | 2.1 |
| wt% $S^=$ | 9.2 | 7.9 |
| wt% $Na_2S_2O_3$ | 2.3 | 2.1 |
| wt% S ($Na_2S_2O_3$) | 0.9 | 0.9 |
| wt% $S°$ | 24.6 | 25.4 |

The objective of the pH adjustment was to reduce the $H_2S$ in the vapor space of the product, in particular as it is a safety concern. This proved possible without down sides for the pH adjusted product. The product prepared from NaSH - NaPS-1 - is 34% more concentrated than Tetragard™. The $S_2O_3^{-2}$ content is less than 1 wt%, compared to > 10 wt% in Tetragard™. The active ingredient $S^{-2}$ is 66% higher in the NaSH-based product NaPS-1. More info in Table 2 below.

Table 2 - A compare of Tetragard™, NaPS-1 and NaPS-1 that is pH adjusted

| NaPS | Tetragard™ | NaPS-1 | NaPS-1- pH adjusted |
|---|---|---|---|
| pH | 12.5 | 9.9 | 12.1 |
| $\rho$ (gm/ml @ 23.3°C) | 1.362 | 1.437 | 1.445 |
| wt% $Na^+$ | 12.1 | 13.6 | 14.2 |
| wt% S, total | 26.2 | | 37.3 |
| wt% $Na_2S_x$ | **38.3** | | **51.5** |
| wt% $S_2O_3^{-2}$ | **10.5** | **0.8** | **0.9** |
| wt% $S^{-2}$ | **5.9** | **10.2** | **9.9** |
| wt% $S°$ | 13.6 | | 26.2 |

Example 3 - Sodium Polysulfides prepared from NaSH stand high temperatures

Even when subjected to a heat treatment post-reaction at 200°C, in a pressure reactor at Patm for about 1-5 hours, the amount of sodium thiosulfates in NaPS-1 (prepared from NaSH) is remains below 10 wt%. This in contrast to a similar NaPS product prepared from NaOH, like Tetragard™ (see Figure 1).

Figure 1. Wt% Sodium Thiosulfate in Sodium Polysulfide (from NaSH and NaOH) after Synthesis, and after 1-5 Hours at 200°C

Example 4 - Potassium Polysulfide synthesis according to the invention

Similarly, a potassium polysulfide (KPS-2) was prepared from KSH (potassium hydrosulfide). KSH was first prepared from KOH and $H_2S$ by the reaction:

$$KOH + H_2S \rightarrow KSH + H_2O$$

In one example, 212.5 gm of $H_2S$ was purged into 699.7 gm of a 50% (wt%) solution diluted with an additional 87. 8gm of water. Stirring was done at ~ 400rpm. Purging was conducted at such a rate where back-pressure was avoided. The maximum temperature reached per the rate of purging was 80°C. The product was found to contain 45.21% (wt%) KSH in water by iodine titration. wt% K by AAS = 23.56. wt% $S_2O_3^{-2}$ by IC = 0.03. The product made was barely colored.

Using the above KSH solution a KPS-2 potassium polysulfide solution was prepared as follows

$$KOH + KSH \rightarrow K_2S + H_2O \qquad (1)$$

$$K_2S + 3S + H_2O \rightarrow K_2S_4 + H_2O \qquad (2)$$

122 gm of 50 wt% KOH was reacted with 45 wt% KSH at 75°C for 30 minutes with stirring at 500rpm. The pale yellow solution of $K_2S$ (reaction 1) was further reacted with elemental sulfur - 240gm of reaction (1) product KSH (45 wt%) was mixed at 500rpm and reacted with 210gm of fine sulfur solid at 75°C for 90 minutes) . The polysulfide product of reaction (2) retains the typical dark red appearance of polysulfide solutions . Assay of the low thiosulfate KPS = 28.7 wt% S, 0.5 wt% $S_2O_3^{-2}$ by IC, 16.8 wt% K by AAS. Total K + total S = 28.7+ 16.8= 44.5 wt%.

Polysulfides according to the invention proved excellent reagents in a Cu/Mo separation flotation processes in comparison to the NaHS standard. Polysulfides according to the invention outperformed Tetragard™ and the calcium polysulfides as used in WO 2015/175498.

**Claims**

1. An aqueous polysulfide composition comprising one or more inorganic polysulfides, wherein the amount of polysulfides in the composition is at least about 35% by weight, preferably at least about 40% by weight; and wherein the amount of thiosulfate anions in the composition is at most about 15% by weight, preferably at most about 10% by weight, relative to the total weight of the composition.

2. The aqueous polysulfide composition according to claim 1 wherein the polysulfides are said polysulfide salts selected from (a1) ammonium polysulfides and/or (a2) alkali metal polysulfides and/or (a3) alkaline earth polysulfides.

3. The aqueous polysulfide composition according to claim 1, wherein the one or more polysulfide salts are selected from calcium polysulfides, sodium polysulfides, potassium polysulfides, ammonium polysulfides or any mixture thereof.

4. The aqueous polysulfide composition according to claim 1, having a pH of from 8 to 13, preferably from 9 to 13.

5. A solid polysulfide based product that is prepared from an aqueous polysulfide composition of claim 1.

6. A process for preparing a polysulfide composition comprising at least about 35% by weight of polysulfide salts and at most about 15% by weight, preferably at most about 10% by weight of thiosulfate anions, relative to the total weight of the composition, said process comprising a step (i) of reacting a hydrosulfide salt (b) and/or a sulfide salt (c) with elemental sulfur.

7. The process according to claim 6 wherein in step (i) an ammonium hydrosulfide (b1) and/or an alkali metal hydrosulfide (b2) and/or an alkaline earth hydrosulfide (b3) is reacted with elemental sulfur (S).

8. The process according to claim 6 wherein in step (i) an ammonium sulfide (c2) and/or an alkali metal sulfide (c2) and/or an alkaline earth sulfide (c3) with elemental sulfur (S).

9. The process according to claim 8, wherein step (i) is preceded by a step (ii) of reacting a hydroxide salt with a hydrosulfide salt to form a sulfide salt (c).

10. The process according to claim 6, wherein the polysulfide composition prepared comprises at least about 40% by weight, preferably at least about 45% by weight, more preferably at least about 50% by weight, of one or more polysulfide salts.

11. The process according to claim 6, wherein the amount of thiosulfate anions in the polysulfide composition is at most about 5% by weight, more preferably at most about 3% by weight, relative to the total weight of the composition.

12. The process according to claim 6, further comprising a step of converting the aqueous composition into a solid product, or into a hydrated salt.

13. A polysulfide composition obtainable by the process according to any of claims 6 to 11 or a solid product prepared therefrom as obtainable by the process according to claim 12.

14. The use of a product according to any of claims 1 to 6 or of a product according to claim 12 in metal capturing, cyanide scavenging, soil remediation, water treatment, in petroleum processing, in leather processing, in the making of paper pulp.

15. The use according to claim 14 wherein the metal being captured is selected from Ni, Ca, Cd, Cu, Mo, Pb, Hg, $Cr^{+6}$, Ag, Ti, Fe and/or Zn.

Europäisches
Patentamt

European
Patent Office

Office européen
des brevets

# EUROPEAN SEARCH REPORT

Application Number

EP 19 20 7225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/157498 A1 (TESSENDERLO KERLEY INC [US]) 15 October 2015 (2015-10-15) * paragraph [0003] - paragraph [0043]; claims 1-20; examples * ----- | 1-15 | INV. C05C9/00 C07C319/22 C22B34/34 |
| X | US 2 608 298 A (NATHANIEL ARBITER ET AL) 26 August 1952 (1952-08-26) * column 1, line 1 - column 4, line 16; claims 1-12; examples * ----- | 1-15 | |
| X | US 5 470 486 A (GILLESPIE RALPH D [US]) 28 November 1995 (1995-11-28) * column 1, line 5 - column 6, line 23; claims 1-7; examples * ----- | 1-15 | |
| X | WO 2017/116775 A1 (TESSENDERLO KERLEY INC [US]) 6 July 2017 (2017-07-06) * paragraph [0001] - paragraph [0133]; claims 1-15; examples * ----- | 1-15 | |
| X | US 2003/050511 A1 (GILMORE JOHN RICHARD [US] ET AL) 13 March 2003 (2003-03-13) * paragraph [0001] - paragraph [0051]; claims 1-17; examples * ----- | 1-15 | TECHNICAL FIELDS SEARCHED (IPC) C05C C22B C05G C07C |
| X | US 3 773 662 A (URBAN P) 20 November 1973 (1973-11-20) * column 1, line 4 - column 10, line 49; claims 1-12; examples * ----- | 1-15 | |

The present search report has been drawn up for all claims

| Place of search | Date of completion of the search | Examiner |
|---|---|---|
| The Hague | 31 March 2020 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 19 20 7225

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2020

| Patent document cited in search report | | Publication date | Patent family member(s) | | Publication date |
|---|---|---|---|---|---|
| WO 2015157498 | A1 | 15-10-2015 | AR | 100063 A1 | 07-09-2016 |
| | | | AU | 2015243469 A1 | 27-10-2016 |
| | | | CA | 2945354 A1 | 15-10-2015 |
| | | | CL | 2016002580 A1 | 10-03-2017 |
| | | | EP | 3129515 A1 | 15-02-2017 |
| | | | PE | 20170101 A1 | 04-03-2017 |
| | | | US | 2017028409 A1 | 02-02-2017 |
| | | | WO | 2015157498 A1 | 15-10-2015 |
| US 2608298 | A | 26-08-1952 | NONE | | |
| US 5470486 | A | 28-11-1995 | NONE | | |
| WO 2017116775 | A1 | 06-07-2017 | AU | 2016382882 A1 | 21-06-2018 |
| | | | BR | 112018013556 A2 | 04-12-2018 |
| | | | CA | 3007488 A1 | 06-07-2017 |
| | | | CL | 2018001683 A1 | 21-09-2018 |
| | | | CN | 108473382 A | 31-08-2018 |
| | | | CO | 2018007611 A2 | 31-07-2018 |
| | | | EA | 201891400 A1 | 31-01-2019 |
| | | | EP | 3397602 A1 | 07-11-2018 |
| | | | KR | 20180099778 A | 05-09-2018 |
| | | | PE | 20181148 A1 | 17-07-2018 |
| | | | US | 2017190576 A1 | 06-07-2017 |
| | | | WO | 2017116775 A1 | 06-07-2017 |
| US 2003050511 | A1 | 13-03-2003 | DE | 60210020 T2 | 07-09-2006 |
| | | | EP | 1293528 A2 | 19-03-2003 |
| | | | JP | 4227787 B2 | 18-02-2009 |
| | | | JP | 2003128645 A | 08-05-2003 |
| | | | US | 2003050511 A1 | 13-03-2003 |
| US 3773662 | A | 20-11-1973 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015157498 A
- WO 2015175498 A